Europäisches Patentamt

European Patent Office

Office européen des brevets

(19)

(11) Publication number: **0 047 584**
A1

## (12) EUROPEAN PATENT APPLICATION

(21) Application number: 81303663.9

(22) Date of filing: 12.08.81

(51) Int. Cl.³: **F 16 D 23/14**

(30) Priority: 10.09.80 FR 8019500

(71) Applicant: **AUTOMOTIVE PRODUCTS LIMITED,** Tachbrook Road, Leamington Spa Warwickshire CV31 3ER (GB)

(43) Date of publication of application: **17.03.82** **Bulletin 82/11**

(72) Inventor: **Nioloux, Raymond, 11 Rue Du Moutier, F-93400 Saint Ouen (FR)**

(84) Designated Contracting States: **BE DE GB IT SE**

(54) **Self aligning release mechanism.**

(57) A self aligning release mechanism for a motor vehicle clutch includes an annular bearing carrier (11) mounted co-axially about the clutch output shaft and having an axial sleeve and a radial flange (21). An annular clutch release bearing (13) is held in a dished annular retainer (18), for radial movement relative to the bearing carrier (11) the retainer web (19) being resiliently biased between an abutment of the axial sleeve and the radial flange (21).

"Self Aligning Release Mechanism"

The invention relates to clutch release bearing assemblies.

A typical clutch release bearing assembly for an automotive clutch incorporates a release member which is guided for generally axial movement either on an axially extending guide member or by means of a pivotable release lever. The release member normally carries a non-rotating race of a ball bearing while the other race of the bearing is rotatable and is intended for engagement with the clutch to apply an axial release load thereto. With a diaphragm spring clutch the release load is normally applied direct to the inner ends of the fingers of the diaphragm spring. In some installations the ball bearing may be replaced by a different form of rolling element bearing such as a roller bearing.

It is difficult to establish accurate axial alignment between the guide member for the release bearing assembly and the clutch itself. Mis-alignment can lead to a variety of problems including premature wear of diaphragm spring fingers and frictional heating leading to a short life for the ball bearing.

In order to overcome the mis-alignment problem the ball bearing can be mounted in the release member for limited radial movement. Some control of the radial position of the ball bearing with respect to the release member is desirable in order to establish and maintain alignment between the bearing and the clutch.

A self-aligning release mechanism for a motor vehicle clutch and comprising an annular bearing carrier for mounting co-axially about the clutch output shaft and including an axial sleeve and a radial flange; and an annular clutch release bearing characterised hereby that said release bearing is held in a dished annular retainer mounted on said bearing carrier sleeve for radial movement limited by a clearance between said sleeve and the retainer, the web of the retainer being resiliently biased between an abutment of said sleeve and a radially outward part of said flange.

Preferably the web of the retainer is resilient and forms an annular spring between said sleeve and said flange.

Other features of the invention are included in the following description of four preferred embodiments shown, by way of example only, on the accompanying drawings in which:-

Fig. 1 is a diagrammatic cross-sectional view through a first embodiment of a clutch release bearing assembly according to the invention;

Fig. 2 is a diagrammatic cross-sectional view through a second embodiment of the invention;

Fig. 3 is a diagrammatic cross-sectional view through a third embodiment of the invention;

Fig. 4 is a diagrammatic cross-sectional view through a fourth embodiment of the invention; and

Fig. 5 is a part transverse section through the release bearing assembly of Fig. 4 on section line 'A-A' and showing the method of assembly.

The clutch release bearing assembly incorporates an annular release member 11 which is guided for axial movement on a sleeve 12 which does not form part of the bearing assembly and is shown in chain-dotted outline. The sleeve 12 may, for example, be supported on a gearbox casing and may be arranged to surround the gearbox input shaft.

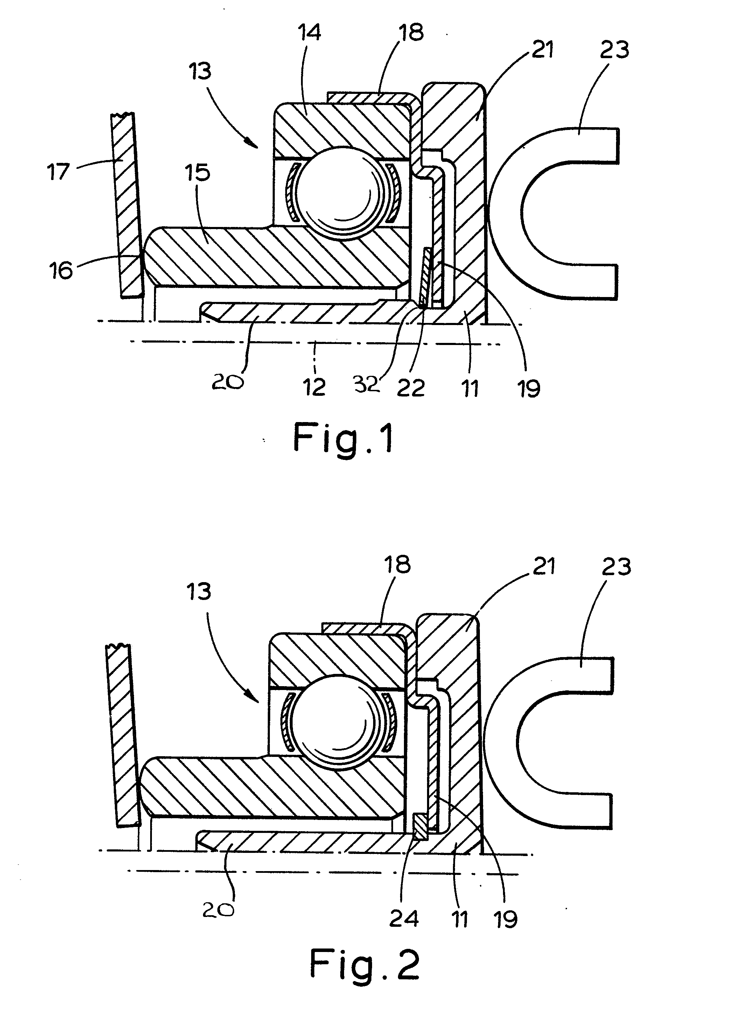

With reference to Fig. 1 there is shown a clutch release ball bearing 13 mounted about the release member 11 and having the usual non-rotating race 14 and rotating race 15. The non-rotating race 14 is an interference fit in a rigid annular cup 18, the inner periphery of the cup radial flange 19 being cranked away from the rotating race 15, as shown.

The release member 11 includes a radial flange 21 having a forward facing annular boss against which the annular cup 18 is located for transmission of clutch release loads.

A small clearance between the inner edge of the cup flange 19 and the release member 11 allows the assembly of bearing 13 and cup 18 to move freely in a radial direction within limits controlled by the axial part of the release member 11.

A Belleville spring 22 is located at its inner edge against a shoulder of the release member 11 and is arranged to lightly load the cup flange 19 against the boss of the release member 11. The spring 22 is of sufficient strength to retain the cup 18 in a given position whilst allowing it to move radially to a new position under the action of an external force as will be described.

An annular forward extension of the rotating race 15 terminates in a curved clutch engagement surface 16 which is intended to bear against the ends of the diaphragm spring fingers of a diaphragm spring clutch. One spring finger 17 is shown in engagement with the surface 16.

A clutch release fork 23 is shown diagrammatically in the drawing in engagement with the release member radial flange 21.

The operation of the release bearing assembly is as follows:-

If on initial assembly the axes of the clutch and of the release bearing are not co-incident the first actuation of the release bearing assembly against the diaphragm spring to release the clutch will cause the bearing 13 to move radially, within the aforementioned limits, into alignment. The release bearing 13 will remain in the centred position by virtue of the Belleville spring 22.

If during use the alignment of the clutch and the release bearing should be disturbed then the release bearing will be re-centred on the next actuation of the release bearing assembly.

In the second embodiment of the invention, shown in Fig. 2, the annular cup 18 is formed from a resilient material, such as spring steel. On assembly onto the release member 11, the cup flange 19 is lightly stressed into engagement with the release member boss and retained in the stressed position by a circlip 24 as shown. The operation of the release bearing assembly is as previously described.

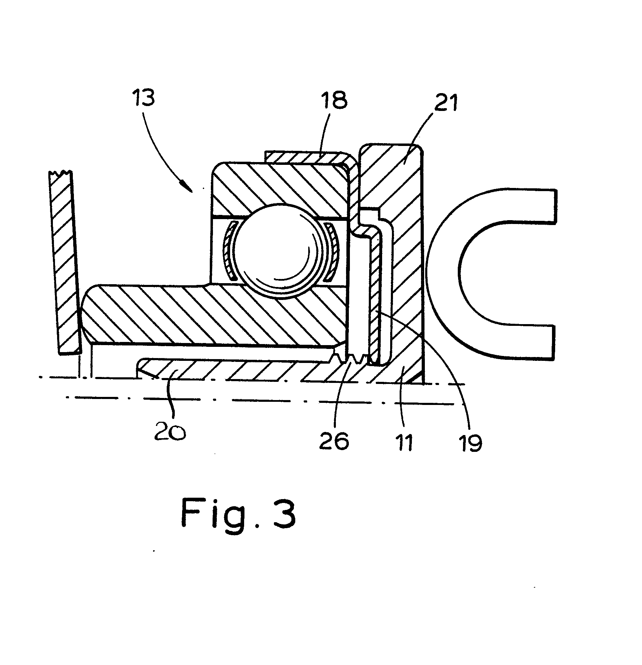

An alternative assembly arrangement to the second embodiment of the invention is shown in Fig. 3. A screw thread 26 is formed on the release member 11 to receive the annular cup 18. As the cup 18 is screwed onto the member 11, the flange 19 is stressed into engagement with the release member boss. The cup 18 is arranged to run off the thread 26 and locate against a perpendicular thread shoulder to give the desired even flange stress.

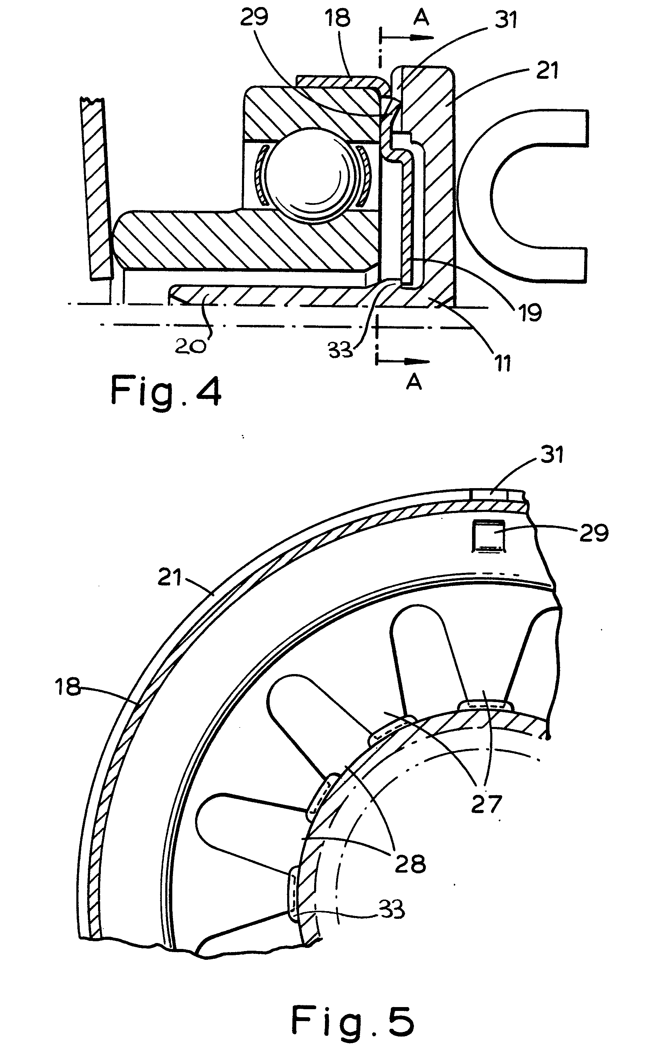

A further alternative assembly arrangement is illustrated in Figs. 4 and 5 of the accompanying drawings.

The radial flange 19 of the cup 18 is formed with spring fingers 21 in the manner of a diaphragm spring. The release member shoulder behind which the radial flange 19 is located has axial flutes 28 corresponding to the size and spacing of the ends of the spring fingers 27. The flange 19 is stressed by urging the spring fingers through the flutes 28 and retained by turning the cup 18 through a small angle to engage the spring finger ends behind the release member shoulder.

A punched tab 29 at the outer periphery of the radial flange 19 engages a recess 31 of the release member boss to lock the cup 18 in position.

I claim:-

1.        A self-aligning release mechanism for a motor vehicle clutch and comprising an annular bearing carrier (11) for mounting co-axially about the clutch output shaft and including an axial sleeve (20) and a radial flange (21); and an annular clutch release bearing (13) characterised thereby that said release bearing is held in a dished annular retainer (18) mounted on said bearing carrier sleeve (20) for radial movement limited by a clearance between said sleeve (20) and the retainer (18), the web (19) of the retainer (18) being resiliently biased between an abutment (32) of said sleeve and a radially outward part of said flange (21).

2.        A mechanism according to Claim 1, characterised thereby that the web (19) of the retainer (18) is resiliently biased by a Belleville washer (22) located against said abutment (32).

3.        A mechanism according to Claim 1 or Claim 2, characterised thereby that said abutment (32) is provided by a ring (24) located in a groove of said sleeve.

0047584

4.     A mechanism according to Claim 1, characterised thereby that the web (19) of the retainer (18) is resilient and forms an annular spring between said sleeve (20) and said flange (21).

5.     A mechanism according to Claim 4, characterised thereby that said abutment is formed by a screw threaded portion (26) of said sleeve (20).

6.     A mechanism according to Claim 4, characterised thereby that the radially inner portion of the retainer web (19) is constituted by radially inwardly directed fingers (27) which can pass axially between and, by relative rotation, engage behind radially outwardly directed projections (33) forming the abutment (32) of said sleeve (20).

7.     A mechanism according to Claim 6, characterised thereby that means (29,31) are provided to engage the radially outer portion of the retainer web (19) with said flange (21) to prevent relative rotation.

8.      A method of assembling a release mechanism according to Claim 5, characterised thereby that the radially inner margin of the retainer web (19) is formed as a nut for the screw threaded portion (26), the length of the threaded portion (26) being limited to allow the retainer web (19) to run off the threaded portion and engage axially behind the threaded portion as against an abutment.

9.      A method of assembling a release mechanism according to Claim 6, characterised thereby that the finger ends and sleeve projections are interdigitated, the fingers are stressed through the plane of the projections towards said flange and the retainer is rotated to engage the finger ends behind the sleeve projections.

0047584

Fig.1

Fig.2

Fig. 3

29  18  A  31
21

Fig.4

20    33    19
11
A

31

29

21

18

27

28

33

Fig.5

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | DE - A - 2 457 352 (SCHAEFFLER)<br><br>* page 3, line 33 - page 4, line 6; figure 2 *<br><br>-- | 1,2 | F 16 D 23/14 |
| P,E,<br>X | GB - A - 2 045 382 (KABUSHIKI)<br><br>* page 2, lines 60-68; lines 95-105; figure 2 *<br><br>& DE - A - 3 010 514<br><br>-- | 1,2,3 | |
| A | US - A - 3 416 637 (MAURICE) | | TECHNICAL FIELDS SEARCHED (Int. Cl.³)<br><br>F 16 D |
| A | US - A - 3 951 244 (NEDER) | | |
| A | FR - A - 2 255 505 (FICHTEL)<br><br>------------ | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-12-1981 | ORTHLIEB |

EPO Form 1503.1   06.78